# EUROPEAN PATENT SPECIFICATION

(11) **EP 0 648 719 B1**
(45) Date of publication and mention of the grant of the patent: **07.01.1998**
(21) Application number: 94116101.0
(22) Date of filing: 12.10.1994
(51) Int. Cl.: C04B 35/83, F27D 17/00

(54) **Method and apparatus for manufacturing C/C composites**
Methode und Apparat zur Herstellung von Kohlenstoff/Kohlenstoff-Verbundstoffen
Méthode et appareil pour la production de composites carbone/carbone

(30) Priority: 15.10.1993 JP 258443/93; 15.10.1993 JP 258444/93
(43) Date of publication of application: 19.04.1995
(73) Proprietor: Sumitomo Electric Industries, Ltd., Osaka 541 (JP)
(72) Inventor: Sakagami, Seigou, c/o Itami Works of, Itami-shi, Hyogo (JP); Takemoto, Takatoshi, c/o Itami Works of, Itami-shi, Hyogo (JP); Kosuga, Eizou, c/o Itami Works of, Itami-shi, Hyogo (JP)
(74) Representative: Eder, Thomas, Dr.-Ing.

(56) References cited:
- EP-A- 0 119 474
- EP-A- 0 260 217
- DE-A- 3 921 980

## Description

The present invention relates to a method and apparatus for manufacturing a C/C (carbon/carbon) composite, a material gathering much attention these days because of its low weight, high strength and excellent heat resistance, by calcining its precursor, while keeping high working ratio.

There are many known methods of manufacturing C/C composites as shown in Japan Aviation & Space Society journal, volume 41, No. 471 (issued April, 1993), at page 182, Table 4.

Among these known methods are impregnating/carbonizing method, combination method and Across method. In these methods, carbon fiber is bound with resin and heated in a calcining furnace to carbonize the resin and thus form a carbon matrix. In the impregnating/carbonizing method, it is a well-known practice to repeat the resin-impregnation and calcining/carbonizing steps many times to increase the density of the C/C composite to a desired level.

Also, another method is sometimes adopted in which carbon fiber is bound with a matrix material (such as resin, resin film, pitch and carbon powder) and the precursor thus formed is calcined or sintered in a calcining furnace while pressing it by means of a hot press. This method is adopted if a product having a relatively high density is desired.

It is also known that fibers used in the production of C/C composites have much influence on the properties of the finished products. Currently, it is considered important to develop a technique for processing coal tar pitch, petroleum pitch and acrilonitrile into fibrous form and calcining them. As for matrix materials, pitches such as coal tar pitch and petroleum pitch, and phenolic, epoxy, fran and polyimide resins, which are all high in the carbonizing rate, are used. Carbon powder is sometimes added.

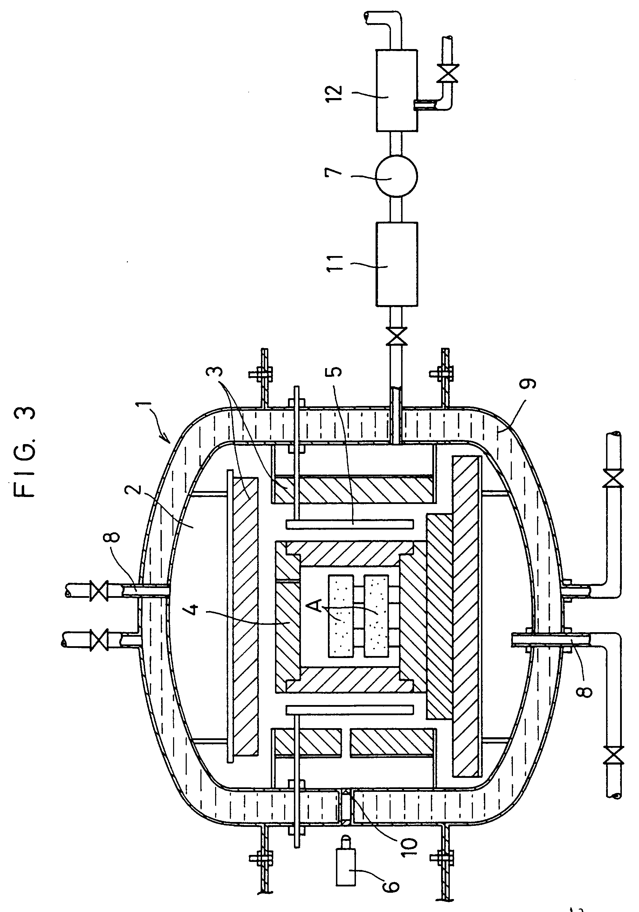

Fig. 3 shows a conventional method and apparatus for calcining a C/C composite precursor formed by binding fibers with resin. The conventional calcining apparatus shown in Fig. 3 has a calcining furnace 1 having a chamber 2 in which are mounted a heat insulating material 3, a calcining case 4 made of carbon and provided inside the insulating material 3, and a heater 5 which utilizes carbon resistance and surrounds the case 4. The precursor A placed in the case 4 is calcined by heating the case 4 with the heater 5.

The power of the heater 5 is controlled by monitoring the temperature in the chamber by an infrared thermometer 6. Exchange of the gas in the chamber 2 is carried out by closing the chamber hermetically, drawing the gas with a vacuum pump 7 until the pressure drops to a certain level and then introducing an inert gas through an inlet 8. Even after gas exchange, inert gas is introduced continuously at a low rate into the chamber to make up for any gas leakage that may occur due to the expansion of gas when heated or due to incomplete sealing.

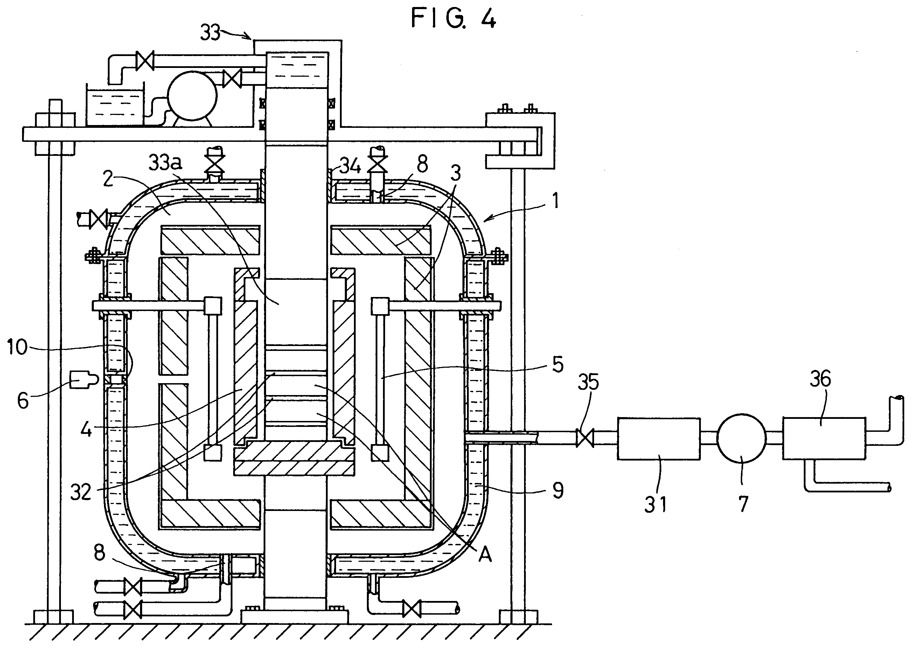

Fig. 4 shows another conventional apparatus for calcining a C/C composite precursor. It is substantially the same as the apparatus of Fig. 3. The pressure in the chamber 2 is kept substantially constant by controlling the solenoid valve 35 while operating the vacuum pump 7. Several precursors A are put one upon another with spacers 32 therebetween and they are pressed by a punch 33a of a press 33 inserted into the calcining case 4 from above.

During the calcining, the precursor produces volatile tar. Part of such tar is discharged from the furnace through the vacuum pump 7, which is kept running to prevent pressure rise in the chamber 2. But the remaining part of the tar sticks to the furnace wall which is cooled by cooling water 9, a monitor window 10 for the infrared thermometer 6, the insulator of the heater 6, etc. Such tar stuck on various parts of the furnace not only soils the interior of the furnace but may cause trouble due to shortcircuiting by carbonizing the insulator of the heater during high-temperature calcining and thus turning the insulator into an electrical conductor. Also, part of the tar drawn into the pump 7 will stick on the inner surface of the pump. This may cause pump trouble.

In the conventional apparatus of Fig. 4, tar diffused in the furnace sticks to a seal 34 of a high-polymer material, deteriorating it. Provision of a filter or condenser 11 upstream of the vacuum pump 7 is not effective to remove the tar. Tar sticks in the pump. Thus, the furnace and the pump have to be inspected and cleaned frequently. This increases the downtime of the facility and thus lowers productivity.

In order to solve this problem, various trials have been made, including the provision of a filter or a water-cooled condenser (numeral 11 in Fig. 3 is such a filter or condenser) in the intake line or the provision of an after-burner 12 (Fig. 3) at the discharge port to the atmosphere. But none of them have been a decisive solution to the problem of tar sticking.

An object of the present invention is to reduce the sticking of tar in the furnace and thus to prevent facility trouble, improve the operation efficiency, and reduce the maintenance trouble and cost.

According to the present invention, the precursor of a C/C composite is calcined while discharging any tar produced from the precursor, from the calcining case in a furnace which is connected to said calcining case and the temperature at which a suction starts is higher than a minimum value of 150°C upon simultaneous application of a suction pressure of at least 2.7 x 10³ Pa.

Preferably, tar should be discharged while the temperature in the chamber of the calcining furnace is between 150°C and 1300°C. More preferably, tar should be discharged while keeping the pressure in the precursor-containing calcining case lower than the pressure in the chamber of the case-containing calcining furnace by 2.7 x 10³ Pa to 6.7 x 10⁴ Pa. When calcining a precursor formed by a resin-impregnating method, the tar-discharge step should be started at 150°C because such a precursor contains a small amount of organic solvent. More preferably, such a precursor should be heated before calcining to 200-400°C in a thermostatic chamber to remove solvents and less volatile substances. In this case, the tar removing step should be started at 300°C.

The calcining apparatus according to the present invention has a tar removing device for removing tar produced in the calcining furnace to embody the above-mentioned method.

As described above, the precursor is calcined in the calcining case placed in the chamber of the calcining furnace. Thus, the tar discharge device used here comprises an exhaust pump provided outside the furnace, an exhaust line extending from the calcining case to the pump, and a solenoid valve provided in the exhaust line. With this arrangement, gasified tar can be discharged while preventing any leakage of tar into the chamber from the calcining case.

Since tar is hot immediately after taken out of the furnace, most part of such tar can be removed by dissolving it in water or oil. The tar-removed gas is expelled into the atmosphere. But before doing so, such gas may be passed through an activated coal filter to remove the remaining trace amount of tar as well as its odor.

In the pressure calcining apparatus which is the second embodiment of the present invention, the precursors are calcined while discharging the tar out of the furnace with the opening of the calcining case closed. Tar is discharged while the temperature in the chamber of the calcining furnace is between 150°C and 1100°C.

According to the present invention, tar is discharged from the calcining furnace through the intake line (exhaust line) of the tar discharge device, which is provided separate from the furnace pressure adjusting line. Gasified tar is thus discharged efficiently. Namely, by setting the pressure in the calcining case lower than the furnace pressure, it is possible to prevent the gasified tar from leaking into the furnace due to the pressure difference. But even if such pressure difference is zero, tar is less likely to be dispersed in the furnace than before because the interior of the case is drawn directly. Thus, the arrangement of the present invention makes it possible to reduce the amount of tar stuck in furnace or completely discharge tar out of the furnace, so that the interior of the furnace is kept clean.

Preferably, tar should be removed while reducing the pressure in the calcining case. But if the pressure Is reduced excessively, the carbonizing rate of the resin in the precursor may decrease. Thus, the pressure in the case should be reduced according to the calcining temperature.

The suction pressure should vary according to the amount of gas produced. But experiment results show that gasified tar can be sucked out substantially completely by keeping the above-mentioned pressure difference in the calcining case at 2.7 x 10³ Pa (about 20 Torr) and higher. Also, the same experiment results revealed that the density of the C/C composite obtained is kept high if the suction pressure is not more than 6.7 x 10³ Pa (about 500 Torr).

Tar is produced only within a certain temperature range. Its production is most active within the temperature range from 400 to 500°C. But as mentioned earlier, solvents in a precursor formed by the resin-impregnating method tend to volatilize at relatively low temperatures. We set the minimum temperature when drawing gas at 150°C because at this temperature, it is possible to remove such gasified solvents as well. If solvents have been removed by pre-heating the precursor, however, it is a waste of energy to begin sucking gas at such a low temperature because at this temperature tar is scarcely produced. In such a case, the gas suction step should be started at or around 300°C.

On the other hand, the maximum suction temperature should be set at 1300°C because at this temperature, any uncalcined part of the resin in the precursor has been carbonized. Keeping on sucking gas at temperatures higher than 1300°C is not only a waste of energy but can reduce the density of the resulting C/C composite because the surrounding atmosphere will have its pressure unduly reduced.

If the calcining temperature is raised at a sufficiently low rate, gas production will stop completely while the temperature is low, so that the suction step may be stopped around 1000°C. In this case, since the pressure within a high-temperature range is kept high, it is possible to produce a C/C composite having a high density.

According to the present invention, tar produced while calcining a C/C composite precursor never sticks or is less likely to stick on the inner surface of the calcining furnace or the pressure adjusting line. This in turn makes it possible to prevent facility trouble, reduce the frequency of maintenance and the downtime of the facility, and to improve productivity.

Other features and objects of the present invention will become apparent from the following description made with reference to the accompanying drawings, in which:
Fig. 1 is a sectional view of one embodiment of a calcining apparatus according to the present invention;
Fig. 2 is a sectional view of one embodiment of a pressure calcining apparatus according to the present invention;
Fig. 3 is a sectional view of a conventional calcining apparatus; and
Fig. 4 is a sectional view of a conventional pressure calcining apparatus.

### (First Embodiment)

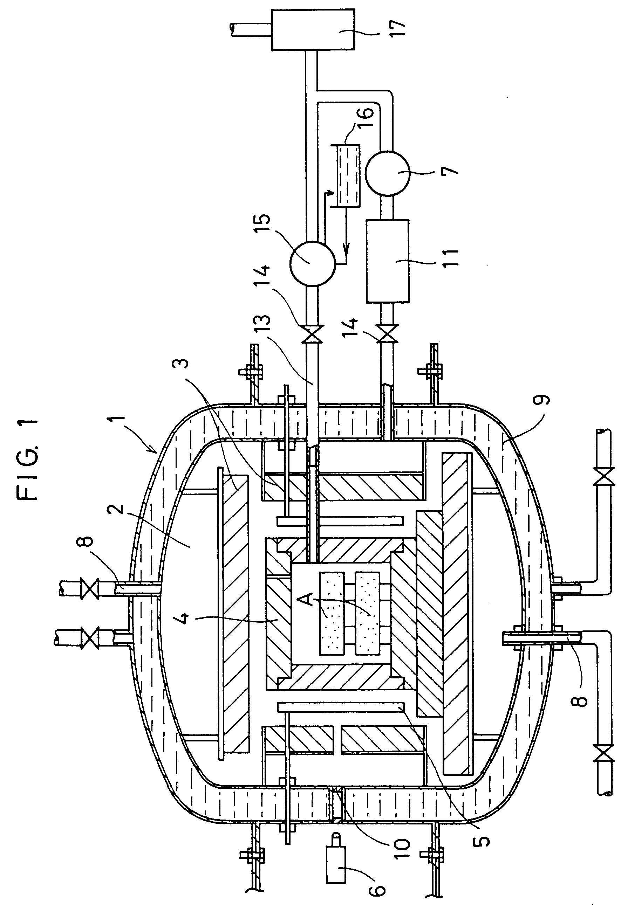

Fig. 1 shows an embodiment of the calcining apparatus according to the present invention. Numerals 1-11 in the figure indicate the elements already described with reference to Fig. 3 and having the same structure and arrangement as those shown in Fig. 3. Thus, their description is not repeated here.

The calcining case 4 provided in the chamber 2 of the calcining furnace 1 has a hole through which an exhaust pipe 13 extends. Part of the pipe 13 where it is subjected to high temperatures, i.e. the portion inside the heat insulating member 3, is made of carbon, while the remaining part, i.e. outside the insulating member 3, is made of a metal. It extends through the furnace wall containing cooling water 9 and is connected to a water seal pump 15 through solenoid valves 14 for changeover with a furnace pressure adjusting system including the vacuum pump 7. Tar is dissolved and collected in the water circulated between the pump 15 and a water tank 16.

The gas drawn into the water seal pump 15 may be discharged directly into the atmosphere. But in this embodiment, such gas is passed through an activated carbon filter 17 to remove odors as well as trace amounts of remaining tar.

The illustrated tar discharge/removal apparatus has a water seal pump as tar collecting means. But such means may be a combination of an ordinary exhaust pump and a filter or a water-cooled condenser. Also, tar may be dissolved in oil by replacing the water seal pump with an oil seal pump.

In operation, after reducing the pressure in the chamber 2 by activating the vacuum pump 7, an inert gas is introduced into the furnace through the inlet 8. In this state, the heater 5 is activated to heat the precursor A in the calcining case 4 while controlling the rate of temperature rise in the furnace by measuring the temperature in the furnace with the infrared thermometer 6. Any uncalcined part of the resin contained by the precursor is gradually heat-decomposed and carbonized while heated.

Although the temperature and rate at which heat decomposition proceeds vary according to the type of resin used, tar in a gas form is inevitably produced as the resin decomposes. As tar is produced, the pressure in the calcining case 4 rises above the pressure in the chamber 2. Thus, the gasified tar will leak out into the chamber if no preventive measure is taken. Accordingly, the solenoid valve 14 in the exhaust line is opened and the water seal pump 15 is activated to draw the gas in the calcining case 4 at a preset temperature before gas leakage occurs. The tar content in the gas drawn out of the case is dissolved in the water being circulated in the water seal pump 15. Any tar content that has not been collected in the water is adsorbed to the activated carbon filter 17.

We will now discuss the results of tar removing experiments conducted using the calcining furnace of the embodiment.

### (Experiment 1)

Several layers of woven cloth made of PAN carbon fiber and impregnated with tar pitch were laminated and heated at 250°C for 40 minutes under the pressure of 200 kg/cm² to bond the layers together. Then, it was cooled gradually. The C/C composite precursor thus formed was p laced in the calcining case in the calcining furnace and calcined under the conditions denoted No. 1 in Table 1 to provide a C/C composite.

We cut off part of this composite specimen and measured its volume and weight to determine its density. The density was 1.60 g/cm³. The interior of the furnace was kept in good condition with no tar found sticking in the furnace.

The same precursor was calcined in the same calcining apparatus under the conditions denoted No. 2 - No. 7 in Table 1. The densities of the C/C composites thus formed are shown in Table 1. Also, the calcining furnace was in such a state as to allow repeated uses.

### (Control Example 1)

The same precursor as used in Experiment 1 was calcined in the conventional apparatus shown in Fig. 3 under the conditions denoted No. 8 in Table 1. Although the C/C composite obtained had a high density, tar was found stuck so much on various parts in the furnace that it was necessary to wipe the inside of the furnace after every calcining.

### (Experiment 2)

The same precursor as used in Experiment 1 was calcined in the apparatus shown in Fig. 1 under the conditions denoted Nos. 9-14 in Table 1. In this experiment, the temperature and pressure when drawing the gas are out of the preferable ranges. Thus, the C/C composites formed under the conditions Nos. 9-12, in which the temperature ranges are wider or the drawing pressures are higher, were low in density. But no tar was found stuck in the furnace, so that the object of reducing the trouble of the facility and simplifying maintenance was achieved. On the other hand, the composites formed under the conditions Nos. 13 and 14, in which the drawing pressures were lower, had a high density. But tar was observed stuck in the furnace, though its amount was smaller than the tar found in the furnace when the composite was formed under the conditions No. 8. Thus, it is possible to reduce the frequency of cleaning.

### (Second Embodiment)

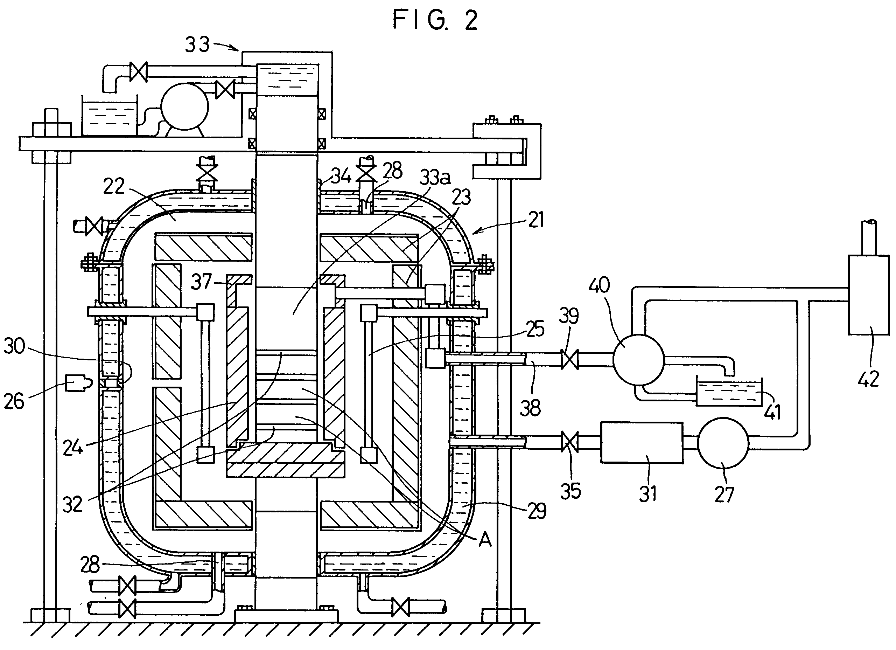

Fig. 2 shows the second embodiment of the calcining apparatus according to the present invention. Numerals 21-31 in the figure indicate the elements illustrated in Fig. 1 by the numerals 1-11. We will therefore omit their description here.

The internal pressure of this pressurizing/calcining apparatus is kept constant by opening and closing a solenoid valve 35 while keeping a vacuum pump 27 activated. A plurality of precursors A are put one over another through spacers 32 and pressed by a punch 33a of pressurizing device 33 that extends from outside the furnace into a calcining case 24.

The calcining case 24 is placed in a chamber 22 of a calcining furnace 21 and is provided on its top with a lid 37 that serves to narrow the gap around the carbon punch 33a. The lid 37 has a hole through which an exhaust pipe 38 extends. Part of the pipe 38 where it is subjected to high temperatures, i.e. the portion inside a heat insulating member 23, is made of carbon, while the remaining part, i.e. outside an insulating material 23, is made of a metal. The pipe 38 extends through the furnace wall which contains cooling water 29, protrudes out of the furnace, and is connected to a water seal pump 40 through solenoid valves 39 for changing over with the furnace pressure adjusting mechanism including the vacuum pump 27. Tar is dissolved and collected in the water circulated between the pump 40 and a water tank 41.

The gas drawn into the water seal pump 40 may be discharged directly into the atmosphere. But in this embodiment, such gas is passed through an activated carbon filter 42 to remove odors as well as trace amounts of remaining tar.

The illustrated tar discharge/removal apparatus has a water seal pump as tar collecting means. But such means may be a combination of an ordinary exhaust pump and a filter or a water-cooled condenser. Also, tar may be dissolved in oil by replacing the water seal pump with an oil seal pump.

In operation, after reducing the pressure in the chamber 22 by activating the vacuum pump 27, an inert gas is introduced into the furnace through an inlet 28. In this state, a heater 25 is activated to heat the precursors A in the calcining case 24 while controlling the rate of temperature rise in the furnace by measuring the temperature in the furnace with an infrared thermometer 26. Any uncalcined part of the resin forming the precursor is gradually heat-decomposed and carbonized while being heated.

Although the temperature and rate at which heat decomposition proceeds depend on the type of resin used and the pressurizing force of the pressurizing device, gasified tar is inevitably produced as the resin decomposes. As tar is produced, the pressure in the calcining case 24 rises above the pressure in the chamber 22. Thus, the gasified tar will leak out into the chamber if no preventive measure is taken. Accordingly, a solenoid valve 39 in the exhaust line is opened and the water seal pump 40 is activated to draw the gas in the calcining case 24 at a preset temperature before gas leakage occurs. The tar content in the gas drawn out of the case is dissolved in the water being circulated in the water seal pump 40. Any tar content that has not been collected in the water is adsorbed to the activated carbon filter 42.

We will now discuss the results of tar removing experiments conducted using the pressurizing/calcining furnace of the embodiment.

### (Experiment 3)

Several layers of woven cloth made of PAN carbon fiber and impregnated with tar pitch were laminated and heated at 250°C for 40 minutes under the pressure of 200 kg/cm² to bond the layers together using a hydraulic heat molding machine. Then, it was cooled gradually. The C/C composite precursor thus formed was placed in the calcining case in the pressurizing/calcining furnace and pressure-calcined under the conditions denoted No. 15 in Table 2 to provide a C/C composite.

We cut off part of this composite specimen and measured its volume and weight to determine its density. The density was 1.75 g/cm³. The interior of the furnace was kept in good condition with no tar found sticking in the furnace.

The same precursor was pressure-calcined in the same pressurizing/calcining apparatus under the conditions denoted No. 16 - No. 21 in Table 2. The densities of the C/C composites thus formed are shown in Table 2. Also, the pressurizing/calcining furnace was in such a state as to allow repeated uses.

### (Control Example 2)

The same precursor as used in Experiment 3 was pressure-calcined in the conventional apparatus shown in Fig. 4, which has no exhaust line similar to that shown in Fig. 2, under the conditions denoted No. 22 in Table 2. Although the C/C composite obtained had a high density, tar was found stuck so much on various parts in the furnace that it was necessary to wipe the inside of the furnace after every calcining.

### (Experiment 4)

The same precursor as used in Experiment 3 was pressure-calcined in the apparatus shown in Fig. 2 under the conditions denoted Nos. 23-28 in Table 2. In this experiment, the temperature when drawing the gas and the drawing pressure are out of the preferable ranges. Thus, the C/C composites formed under the conditions Nos. 23-26, in which the temperature ranges during suction are wider or the drawing pressures are higher, were low in density. But no tar was found stuck in the furnace, so that the object of reducing the trouble of the facility and simplifying maintenance was achieved. On the other hand, the composites formed under the conditions Nos. 27 and 28, in which the drawing pressures were lower, had a high density. But tar was observed stuck in the furnace. But its amount was smaller than the tar found in the furnace when a composite was formed under the conditions No. 22. Thus, it is possible to reduce the frequency of cleaning in the furnace and replacing the seal members.

**[Table 1]**

| Calcining conditions and results | | | | | |
|---|---|---|---|---|---|
| No. | Calcining conditions | | | Results | |
| | Temperatures at which suction starts and ends (°C) | Suction pressure (Pa) | Temperature at which furnace reach (°C) | C/C composite density (g/cm³) | Condition of furnace inside |
| 1 | 150 - 1300 | 2.7 × 10³ | 2000 | 1.60 | Good |
| 2 | 150 - 1000 | 2.7 × 10³ | 1800 | 1.58 | Good |
| 3 | 300 - 1300 | 9.5 × 10³ | 2000 | 1.59 | Good |
| 4 | 300 - 1000 | 3.4 × 10⁴ | 2000 | 1.58 | Good |
| 5 | 300 - 1300 | 6.7 × 10⁴ | 1800 | 1.56 | Good |
| 6 | 150 - 1300 | 6.7 × 10⁴ | 2000 | 1.57 | Good |
| 7 | 300 - 1000 | 6.7 × 10⁴ | 2000 | 1.57 | Good |
| 8 | None | None | 2000 | 1.60 | * |
| 9 | Room temperature- 2000 | 2.7 × 10³ | 2000 | 1.50 | Good |
| 10 | 150 - 1000 | 8.1 × 10⁴ | 2000 | 1.48 | Good |
| 11 | 300 - 1400 | 2.7 × 10³ | 1800 | 1.48 | Good |
| 12 | 100 - 1000 | 8.1 × 10⁴ | 2000 | 1.48 | Good |
| 13 | Room temperature - 800 | 2.7 × 10³ | 2000 | 1.58 | * |
| 14 | 150-1300 | 1.4 × 10³ | 2000 | 1.60 | * |
| *: Tar stuck in the furnace. | | | | | |

**[Table 2]**

| Calcining conditions and results | | | | | | |
|---|---|---|---|---|---|---|
| No. | Calcining conditions | | | | Results | |
| | Temperatures at which suction starts and ends (°C) | Suction pressure (Pa) | Temperature at which furnace reach (°C) | Pressure (MP) | C/C composite density (g/cm³) | Condition of furnace inside |
| 15 | 150 - 1100 | 2.7 × 10³ | 2000 | 40 | 1.75 | Good |
| 16 | 150 - 900 | 2.7 × 10³ | 1800 | 30 | 1.73 | Good |
| 17 | 300 - 1100 | 9.5 × 10³ | 2000 | 35 | 1.74 | Good |
| 18 | 300 - 900 | 3.4 × 10⁴ | 2000 | 35 | 1.73 | Good |
| 19 | 300 - 1100 | 6.7 × 10⁴ | 1800 | 35 | 1.71 | Good |
| 20 | 150 - 1100 | 6.7 × 10⁴ | 2000 | 45 | 1.72 | Good |
| 21 | 300 - 900 | 6.7 × 10⁴ | 2000 | 40 | 1.72 | Good |
| 22 | None | None | 2000 | 40 | 1.75 | * |
| 23 | Room temp.- 2000 | 2.7 × 10³ | 2000 | 25 | 1.65 | Good |
| 24 | 150 - 900 | 8.1 × 10⁴ | 2000 | 25 | 1.63 | Good |
| 25 | 300 - 1300 | 2.7 × 10³ | 1800 | 30 | 1.63 | Good |
| 26 | 100 - 900 | 8.1 × 10⁴ | 2000 | 35 | 1.63 | Good |
| 27 | Room temp.- 700 | 2.7 × 10³ | 2000 | 40 | 1.73 | * |
| 28 | 150-1100 | 1.4 × 10³ | 2000 | 40 | 1.75 | * |
| *: Tar stuck in the furnace. | | | | | | |

## Claims

1. A method of producing a C/C composite by calcining a precursor of the C/C composite in a calcining case placed in a chamber of a calcining furnace, **characterized in** that said precursor is calcined while discharging any gasified tar coming from said precursor out of said calcining case by means of a tar discharge means, which is connected to said calcining case, and that the temperature at which a suction starts is higher than a minimum value of 150°C upon simultaneous application of a suction pressure of at least 2.7 x 10³ Pa.

2. A method of producing a C/C composite as claimed in claim 1 wherein the gasified tar is discharged while the temperature in the chamber of said calcining furnace is between 150°C and 1300°C.

3. A method of producing a C/C composite as claimed in claim 1 wherein the gasified tar is discharged while keeping the pressure in said calcining case lower than the pressure in the chamber of said calcining furnace by 2.7 x 10³ Pa to 6.7 x 10⁴ Pa.

4. An apparatus for producing a C/C composite comprising a calcining furnace having a chamber for calcining a precursor of the C/C composite, a calcining case mounted in the chamber of said calcining furnace for receiving said precursor of the C/C composite, and a tar discharge means connected directly to said calcining case for discharging any gasified tar coming from said precursor out of the apparatus.

5. An apparatus for producing a C/C composite as claimed in claim 4 wherein said tar discharge means comprises an exhaust pump provided outside said calcining furnace, an exhaust line extending from said calcining case to said exhaust pump, and a solenoid valve provided in said exhaust line.

6. A method of producing a C/C composite comprising the steps of placing a precursor of the C/C composite in a calcining case in a calcining furnace, and calcining said precursor while pressing it with a punch inserted into said calcining case from outside said furnace, wherein an opening of said calcining case is closed with a lid, characterized in that a tar discharge device is connected to said calcining case, that said step of calcining said precursor is carried out while discharging any gasified tar coming from the precursor out of said calcining case by means of a tar dicharging means, and that the temperature at which a suction starts is higher than a minimum value of 150°C upon simultaneous application of a suction pressure of at least 2.7 x 10³ Pa.

7. A method of producing a C/C composite as claimed in claim 6 wherein the gasified tar is discharged while said temperature in the chamber of said calcining furnace is between 150°C and 1100°C.

8. A method of producing a C/C composite as claimed in claim 6 wherein the gasified tar is discharged while keeping the pressure in said calcining case lower than the pressure in said chamber of said calcining furnace by 2.7 x 10³ Pa to 6.7 x 10⁴ Pa.

9. An apparatus for producing a C/C composite having a calcining furnace having a chamber for calcining a precursor of the C/C composite placed in a calcining case in the furncace while pressing it with a punch inserted into said calcining case from outside the furnace, said calcining furnace having a tar discharge means directly connected to the calcining case for discharging any tar coming from said precursor out of the apparatus without passing through said chamber.

10. An apparatus for producing a C/C composite as claimed in claim 9 wherein said tar discharge means comprises a lid for closing an opening of said calcining case, an exhaust pump provided outside said calcining furnace, an exhaust line extending from said calcining case to said exhaust pump, and a solenoid valve provided in said exhaust line.

## Patentansprüche

1. Verfahren zur Herstellung eines C/C-Verbundwerkstoffes durch Brennen eines Vorläufers des C/C-Verbundwerkstoffes in einer Brennkapsel, die sich in einer Kammer eines Brennofens befindet, **dadurch gekennzeichnet**, dass beim Brennen des Vorläufers jeglicher aus dem Vorläufer hervorgehender vergaster Teer aus der Brennkapsel durch ein Teerabgabemittel, welches mit der Brennkapsel verbunden ist, abgegeben wird, und dass die Temperatur, bei der ein Absaugen beginnt, höher ist als ein Minimalwert von 150° C bei gleichzeitiger Anwendung eines Absaugdrucks von mindestens 2,7 x 10³ Pa.

2. Verfahren zur Herstellung eines C/C-Verbundwerkstoffes nach Anspruch 1, bei dem während der Abgabe des vergasten Teers die Temperatur in der Kammer des Brennofens zwischen 150°C und 1300°C ist.

3. Verfahren zur Herstellung eines C/C-Verbundwerkstoffes nach Anspruch 1, bei dem bei der Abgabe des vergasten Teers der Druck in der Brennkapsel niedriger gehalten wird als der Druck in der Kammer des Brennofens, und zwar um 2,7 x 10³ Pa bis 6,7 x 10⁴ Pa.

4. Vorrichtung zur Herstellung eines C/C-Verbundwerkstoffes, bestehend aus einem Brennofen mit einer Kammer zum Brennen eines Vorläufers des C/C-Verbundwerkstoffes, einer in der Kammer des Brennofens angeordneten Brennkapsel zur Aufnahme des Vorläufers des C/C-Verbundwerkstoffes, und einem Teerabgabemittel, das direkt mit der Brennkapsel verbunden ist, um jeglichen aus dem Vorläufer hervorgehenden vergasten Teer aus der Vorrichtung abzugeben.

5. Vorrichtung zur Herstellung eines C/C-Verbundwerkstoffes nach Anspruch 4, bei der das Teerabgabemittel eine Abzugpumpe außerhalb des Brennofens aufweist, eine Abzugleitung, die sich von der Brennkapsel zur Abzugpumpe erstreckt, und ein in der Abzugleitung angeordnetes Magnetventil.

6. Verfahren zur Herstellung eines C/C-Verbundmaterials, bei dem ein Vorläufer des C/C-Verbundmaterials in eine Brennkapsel in einem Brennofen eingesetzt wird, und bei dem der Vorläufer gebrannt wird, während er gleichzeitig durch einen Stempel gepresst wird, der von der Außenseite des Ofens in die Brennkapsel eingesetzt wird, wobei eine Öffnung der Brennkapsel durch einen Deckel verschlossen ist, dadurch gekennzeichnet, dass eine Teerabgabevorrichtung mit der Brennkapsel verbunden ist, dass bei dem Verfahrensschritt des Brennens des Vorläufers jeglicher aus dem Vorläufer hervorgehender vergaster Teer durch ein Teerabgabemittel aus der Brennkapsel abgegeben wird, und dass die Temperatur, bei der ein Absaugen beginnt, höher ist als ein Minimalwert von 150°C bei gleichzeitiger Anwendung eines Absaugdrucks von mindestens 2,7 x 10³ Pa.

7. Verfahren zur Herstellung eines C/C-Verbundmaterials nach Anspruch 6, bei dem bei der Abgabe des vergasten Teers die Temperatur in der Kammer des Brennofens zwischen 150°C und 1100°C liegt.

8. Verfahren zur Herstellung eines C/C-Verbundmaterials nach Anspruch 6, bei dem bei der Abgabe des vergasten Teers der Druck in der Brennkapsel niedriger ist als der Druck in der Kammer des Brennofens, und zwar um 2,7 x 10³ Pa bis 6,7 x 10⁴ Pa.

9. Vorrichtung zur Herstellung eines C/C-Verbundmaterials, mit einem Brennofen mit einer Kammer zum Brennen eines Vorläufers des C/C-Verbundmaterials, der in einer Brennkapsel im Ofen angeordnet ist und der gleichzeitig mit einem von der Außenseite des Ofens in die Brennkapsel eingesetzten Stempel gepresst wird, wobei der Brennofen ein Teerabgabemittel besitzt, das direkt mit der Brennkapsel verbunden ist, um jeglichen aus dem Vorläufer hervorgehenden Teer aus der Vorrichtung abzugeben, ohne dass dieser die Kammer passiert.

10. Vorrichtung zur Herstellung eines C/C-Verbundmaterials nach Anspruch 9, bei der das Teerabgabemittel einen Deckel zum Verschließen einer Öffnung der Brennkapsel besitzt, eine außerhalb des Brennofens angeordnete Abzugpumpe, eine sich von der Brennkapsel zur Abzugpumpe erstreckende Abzugleitung und ein in der Abzugleitung angeordnetes Magnetventil.

## Revendications

1. Procédé pour la production d'un composite carbone/carbone par calcination d'un précurseur du composite cabone/carbone dans un boîtier de calcination placé dans une chambre d'un four de calcination, caractérisé en ce que ledit précurseur est calciné lors de l'évacuation de tout goudron gazéifié, venant dudit précurseur, vers l'extérieur du boîtier de calcination par des moyens d'évacuation de goudron qui sont reliés audit boîtier de calcination et en ce que la température à laquelle l'aspiration démarre est supérieure à une valeur minimale de 150°C pour l'application simultanée d'une pression d'aspiration d'au moins 2,7 x 10³ Pa.

2. Procédé pour la production d'un composite carbone/carbone selon la revendication 1, dans lequel le goudron gazéifié est évacué lorsque la température dans la chambre dudit four de calcination est comprise entre 150°C et 1300°C.

3. Procédé pour la production d'un composite carbone/carbone selon la revendication 1, dans lequel le goudron gazéifié est évacué tout en maintenant la pression dans ledit boîtier de calcination inférieure à la pression régnant dans la chambre dudit four de calcination de 2,7 X 10³ Pa à 6,7 X 10⁴ Pa.

4. Appareil pour la production d'un composite carbone/carbone comprenant un four de calcination ayant une chambre pour calciner un précurseur d'un composite carbone/carbone, un boîtier de calcination monté dans la chambre dudit four de calcination pour recevoir ledit précurseur de composite carbone/carbone et des moyens d'évacuation de goudron reliés directement audit boîtier de calcination pour évacuer tout goudron gazéifié, venant dudit précurseur, vers l'extérieur de l'appareil.

5. Appareil pour la production d'un composite carbone/carbone selon la revendication 4, dans lequel les moyens d'évacuation de goudron comprennent une pompe d'aspiration disposée à l'extérieur dudit four de calcination, une ligne d'évacuation s'étendant depuis ledit boîtier de calcination vers ladite pompe d'évacuation et une électrovanne disposée dans ladite ligne d'évacuation.

6. Procédé pour la fabrication d'un composite carbone/carbone comprenant les étapes consistant à placer un précurseur d'un composite carbone/carbone dans un boîtier de calcination disposé dans un four de calcination et à calciner ledit précurseur tout en le comprimant avec un poinçon inséré dans ledit boîtier de calcination depuis l'extérieur dudit four, dans lequel une ouverture dudit boîtier de calcination est fermée par un couvercle, caractérisé en ce que le dispositif d'évacuation de goudron est relié audit boîtier de calcination, en ce que ladite étape consistant à calciner ledit précurseur est effectuée lorsque tout goudron gazéifié, venant du précurseur, est évacué vers l'extérieur dudit boîtier de calcination par des moyens de d'évacuation de goudron, et en ce que la température à laquelle l'aspiration démarre est supérieure à une valeur minimale de 150°C pour l'application simultanée d'une pression d'aspiration d'au moins 2,7 x 10³ Pa.

7. Procédé pour la production d'un composite carbone/carbone selon la revendication 6, dans lequel le goudron gazéifié est évacué lorsque la température de la chambre dudit four de calcination est comprise entre 150°C et 1100°C.

8. Procédé pour la production d'un composite carbone/carbone selon la revendication 6, dans lequel le goudron gazéifié est évacué tout en maintenant la pression dans ledit boîtier de calcination inférieure à la pression régnant dans ladite chambre dudit four de calcination de 2,7 x 10³Pa à 6,7 x 10⁴ Pascal.

9. Appareil pour la production d'un composite carbone/carbone comprenant un four de calcination ayant une chambre pour calciner un précurseur d'un composite carbone/carbone placé dans un boîtier de calcination disposé dans le four tout en le comprimant avec un poinçon inséré dans ledit boîtier de calcination depuis l'extérieur du four, ledit four de calcination comprenant des moyens d'évacuation du goudron reliés directement au boîtier de calcination pour évacuer tout goudron, venant du précurseur, vers l'extérieur de l'appareil sans passer par ladite chambre.

10. Appareil pour la production d'un composite carbone/carbone selon la revendication 9, dans lequel lesdits moyens d'évacuation du goudron comprennent un couvercle pour fermer une ouverture dudit boîtier de calcination, une pompe d'évacuation disposée à l'extérieur dudit four de calcination, une ligne d'évacuation s'étendant depuis ledit boîtier de calcination vers ladite pompe d'évacuation, et une électrovanne disposée dans ladite ligne d'évacuation.
